# FASCICULE DE BREVET EUROPEEN

(11) **EP 0 514 239 B1**
(45) Date de publication et mention de la délivrance du brevet: **06.07.1994**
(21) Numéro de dépôt: 92401228.9
(22) Date de dépôt: 30.04.1992
(51) Int. Cl.: B60T 13/57

(54) **Servomoteur pneumatique**
Pneumatischer Bremskraftverstärker
Pneumatic servomotor

(30) Priorité: 14.05.1991 FR 9105845
(43) Date de publication de la demande: 19.11.1992
(73) Titulaire: ALLIEDSIGNAL EUROPE SERVICES TECHNIQUES, 93700 Drancy (FR)
(72) Inventeur: Gautier, Jean-Pierre, Bendix Europe Service Tech., F-93700 Drancy (FR); Verbo, Ulysse, Bendix Europe Service Tech., F-93700 Drancy (FR); Perez, Miguel, Bendix Europe Service Tech., F-93700 Drancy (FR)
(74) Mandataire: Bentz, Jean-Paul

(56) Documents cités:
- FR-A- 2 625 156
- GB-A- 2 076 488
- US-A- 4 608 825

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique un piston comportant une partie tubulaire arrière et une jupe et qui, à l'aide d'une membrane déroulante, définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire d'un plongeur sur l'une des faces d'un disque de réaction solidaire d'une tige de poussée, le moyen de valve comportant un clapet coopérant par une partie active avec un premier siège de valve formé sur le plongeur et avec un second siège de valve formé sur le piston, la chambre arrière se trouvant reliée à l'atmosphère à travers un espace annulaire défini entre les premier et second sièges de valve lorsque le plongeur est enfoncé à l'intérieur du piston. Un tel servomoteur est, par exemple, connu du GB-A-2 076 488.

De tels servomoteurs, s'ils ont un fonctionnement satisfaisant, présentent néanmoins quelques inconvénients. C'est ainsi que lors du freinage, le passage offert à l'air atmosphérique vers la chambre arrière est réduit, ce qui ralentit le mouvement de l'air en direction de la chambre arrière et accroît le temps de réponse du servomoteur. Différents compromis ont été proposés pour que ce temps de réponse soit acceptable pour des freinages dits "normaux" où seul un ralentissement du véhicule est désiré. Cependant, ce temps de réponse est toujours beaucoup trop important lors d'un freinage brusque où une intervention rapide de l'asservissement est désirée.

La présente invention a par conséquent pour objet de prévoir un servomoteur dont le temps de réponse soit le plus faible possible lors d'un freinage brusque.

A cette fin, le servomoteur de l'invention est essentiellement caractérisé en ce que le plongeur présente au moins un passage radial, chaque passage radial étant, au repos et lors d'une action de freinage normal, fermé de façon étanche par une portion du piston et se trouvant, lors d'une action de freinage brusque, découvert par cette portion pour faire communiquer la chambre arrière avec l'atmosphère, chaque passage radial et la portion de piston correspondante contribuant à constituer un second moyen de valve sélectivement opérationnel en cas de freinage brusque.

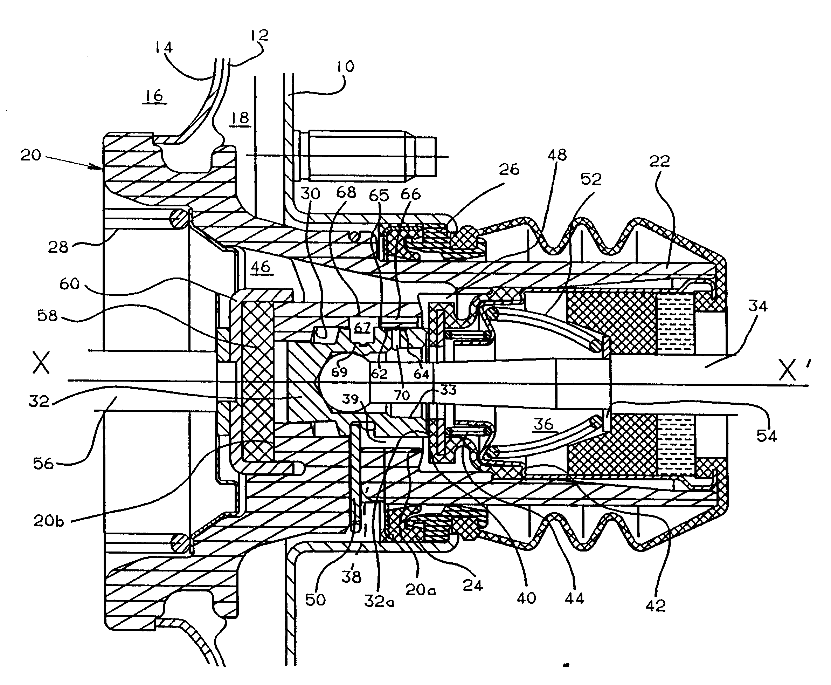

D'autres buts, caractéristiques et avantages ressortiront de la description qui suit d'un mode de réalisation de la présente invention, donnée à titre non limitatif, en référence aux dessins annexés dans lesquels :
- La Figure Unique est une vue de côté, en coupe longitudinale, représentant la partie centrale d'un servomoteur pneumatique d'assistance au freinage réalisé de façon classique selon la moitié inférieure de la Figure, et réalisé conformément à la présente invention selon la moitié supérieure de la Figure.

La moitié inférieure de la Figure représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur comprend une enveloppe extérieure 10 en forme de coquille, présentant une symétrie de révolution autour d'un axe X-X′. Seule la partie centrale arrière de cette enveloppe 10 est représentée sur la Figure.

Une membrane déroulante souple en élastomère 12, renforcée dans sa partie centrale par un disque support métallique 14 encore appelé jupe, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X′ du servomoteur. Ce piston creux 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10.

Un ressort de compression 28 interposé entre le piston 20 et la paroi avant (non représentée) de l'enveloppe extérieure 10 maintient normalement le piston 20 et la jupe 14 dans une position arrière de repos illustrée sur la Figure, dans laquelle la chambre arrière 18 présente son volume minimal et la chambre avant 16 son volume maximal.

Dans sa partie centrale située entre la partie arrière tubulaire 22 et la partie avant dans laquelle sont fixées la membrane 12 et la jupe 14, le piston 20 présente un alésage 30 dans lequel est reçu en coulissement un plongeur 32 présentant également une symétrie de révolution autour de l'axe X-X′. L'extrémité avant d'une tige de commande 34 du servomoteur, disposée également selon l'axe X-X′, est montée rotulante dans un alésage borgne 33 formé à l'arrière du plongeur 32.

L'extrémité arrière (non représentée) de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire du piston 20 débouche vers l'atmosphère extérieure à l'arrière du servomoteur, par exemple par l'intermédiaire d'un filtre à air. Vers l'avant, ce même espace annulaire peut communiquer avec la chambre arrière 18 au travers d'un passage radial 38 formé dans la partie centrale du piston, et de passages 39 ménagés entre le plongeur 32 et l'alésage 30 du piston 20 lorsque des moyens d'assistance commandés par le plongeur 32 sont actionnés.

De façon classique, ces moyens d'assistance comprennent une valve trois voies comportant un clapet annulaire 40 monté dans la partie tubulaire du piston et deux sièges de valve annulaires 20a et 32a formés respectivement sur la partie centrale du piston 20 et sur le plongeur 32.

Le clapet 40 constitue l'extrémité avant, de plus petit diamètre, d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression 44 tendant à déplacer le clapet 40 vers l'avant.

Le siège de valve annulaire 32a est formé sur la face d'extrémité arrière du plongeur 32. De façon comparable, le siège de valve annulaire 20a est formé sur la face d'extrémité arrière de la partie centrale du piston 20, autour du siège 32a. Selon la position du plongeur 32 à l'intérieur du piston 20, cet agencement permet au clapet 40 d'être constamment en appui étanche avec l'un au moins des sièges de valve 32a et 20a sous l'action du ressort 44.

Un second passage 46 est formé dans la partie centrale du piston 20, approximativement parallèlement à son axe X-X′, pour faire communiquer la chambre avant 16 du servomoteur avec une chambre annulaire 48 formée autour du clapet 40, à l'intérieur de la partie tubulaire 22 du piston 20. Lorsque le plongeur 32 occupe sa position arrière de repos illustrée sur la Figure, dans laquelle le clapet 40 est en appui étanche sur le siège 32a du plongeur 32 et écarté du siège 20a du piston 20, les chambres avant 16 et arrière 18 du servomoteur communiquent ainsi entre elles par le passage 46, la chambre annulaire 48 et le passage 38.

D'une manière elle aussi classique, au moins un organe de butée 50 monté dans la partie centrale du piston 20 délimite la course axiale du plongeur 32 à l'intérieur de ce dernier. Le plongeur 32 est normalement maintenu dans la position arrière de repos définie par l'organe 50 au moyen d'un ressort de compression 52 interposé entre la coupelle 42 et une rondelle 54 elle-même en appui sur un épaulement formé sur la tige de commande 34.

Dans sa partie centrale, le piston 20 comprend une face avant annulaire 20b au centre de laquelle débouche l'alésage 30. Cette face avant annulaire 20b du piston 20 agit sur une face arrière d'une tige de poussée 56, au travers d'un disque de réaction 58 en un matériau déformable tel qu'un élastomère. De façon plus précise, la tige de poussée 56 et le disque de réaction 58 sont disposés selon l'axe X-X′ du servomoteur, dans le prolongement de la tige de commande 34 et du plongeur 32. Le disque de réaction 58 est coiffé par un capot 60 solidaire de la tige de poussée 56 et centré sur l'axe X-X′ du servomoteur et coopérant avec une gorge annulaire formée sur la partie centrale du piston 20, autour de la face avant annulaire 20b de ce dernier.

Le fonctionnement de ce servomoteur connu est classique et peut être décrit succinctement de la façon suivante.

Lorsque le servomoteur est installé sur un véhicule, la chambre avant 16 communique en permanence avec une source de vide.

Dans un premier temps, l'effort effectué sur la pédale de frein par le conducteur a pour effet d'égaler l'effort de précontrainte du ressort 52 diminué de l'effort de précontrainte du ressort 44. Au cours du léger déplacement suivant, de la tige de commande 34 et du plongeur 32, le clapet 40, sous l'action du ressort 44, suit le siège 32a du plongeur 32, jusqu'à ce qu'il vienne au contact du siège 20a du piston ; les chambres avant 16 et arrière 18 du servomoteur sont alors isolées l'une de l'autre.

Dans une deuxième phase de l'actionnement du frein, le plongeur 32 est déplacé suffisamment vers l'avant pour que le clapet 40 soit en contact étanche avec le siège 20a du piston et commence à s'éloigner du siège 32a du plongeur. Dans ces conditions, la chambre arrière 18 du servomoteur est isolée de la chambre avant 16 et entre en communication avec l'atmosphère.

La chambre arrière 18, qui communiquait auparavant avec la chambre avant 16 et se trouvait donc sous une pression réduite, aspire donc l'air à la pression atmosphérique à travers le passage radial 38, les passages 39 ménagés entre le plongeur 32 et l'alésage 30 du piston 20, et le passage de valve de faible section entre le clapet 40 et le siège de plongeur 32a. Il s'ensuit donc une entrave importante au passage de l'air due à la faiblesse de l'interstice du passage de valve 32a-40, et donc un temps de réponse important, qui, s'il est peu sensible dans un freinage où seul le ralentissement du véhicule est désiré, peut devenir prohibitif lors d'un freinage brusque.

On comprend donc qu'il est hautement désirable de réaliser un servomoteur où, pour une course de la tige de commande 34 correspondant à un freinage brusque, la section offerte au passage de l'air soit la plus grande possible pour que le temps de réponse soit le plus faible possible sans augmenter la course morte du servomoteur.

Ce but est atteint grâce à l'invention dont un exemple d'un mode de réalisation est représenté sur la moitié supérieure de la Figure.

On voit sur la moitié supérieure de la Figure que le piston 20 et le plongeur 32 ont été modifiés dans ce but. Selon l'invention, le plongeur 32 coulisse de façon étanche dans l'alésage 30 grâce à deux joints d'étanchéité 62 et 64, disposés par exemple dans la partie arrière du plongeur 32. Dans une portion 65 de la partie centrale du piston 20 où le plongeur est reçu en coulissement étanche sont pratiqués des passages axiaux 66 faisant communiquer la chambre annulaire 48 formée autour du clapet 40 avec un volume annulaire 67 formé entre une gorge 68 à l'intérieur de l'alésage 30 et une gorge 69 formée à la périphérie du plongeur 32 en regard de la gorge 68. Dans ce volume annulaire 67 débouche le passage radial 38 vers la chambre arrière 18. Des passages radiaux 70 sont pratiqués dans le plongeur 32, débouchant d'une part dans l'alésage borgne 33 du plongeur 32, et d'autre part à la périphérie extérieure du plongeur 32 entre les deux joints 62 et 64.

Le fonctionnement de ce servomoteur se déduit aisément des explications qui précèdent. La première phase d'actionnement, au cours de laquelle les chambres avant 16 et arrière 18, sont isolées l'une de l'autre, est identique à celle qui a été décrite précédemment.

Dans une deuxième phase d'actionnement normal du frein, la chambre arrière 18 du servomoteur est mise en communication avec l'atmosphère par le passage radial 38, le volume annulaire 67, les passages axiaux 66 et le passage de valve 32a-40. Il s'ensuit un déséquilibre des pressions sur les deux faces de la jupe 14 du piston, donnant naissance à une force d'assistance transmise par le piston 20 à la tige de poussée 56. Plus exactement, cette force d'assistance est exercée par la face avant annulaire 20b du piston 20 sur le disque de réaction 58. Ce dernier transmet une partie de la force d'assistance à la tige de poussée 56 et utilise une autre partie de cette force pour se déformer vers l'arrière dans l'espace compris entre l'alésage 30 et le plongeur 32. Cette déformation se poursuit jusqu'à ce que la partie déformée du disque de réaction 58 vienne au contact de la face avant du plongeur 32. Au cours de cette phase qui correspond à ce qu'on appelle le saut du servomoteur, le piston 20 et le plongeur 32 avancent ensemble. A la fin de cette phase, une réaction commence à naître sur le plongeur 32 et la tige de poussée 34, faisant reculer le plongeur 32 par rapport au piston 20, et entraînant donc la fermeture du passage de valve 32a-40.

On voit donc que, lors d'un freinage normal, le servomoteur de l'invention se comporte de façon classique.

Par contre, dans une phase d'actionnement brusque du frein, une force soudaine est exercée sur la tige de commande 34. Il s'ensuit un avancement rapide du plongeur 32 dans l'alésage 30. La première phase d'isolement des chambres avant et arrière se déroule classiquement. Puis le passage de valve 32a-40 s'ouvre, permettant à l'air à la pression atmosphérique de pénétrer dans la chambre arrière 18 via les passages 66, le volume annulaire 67 et le passage 38. La pression dans la chambre arrière augmente donc, créant une force d'assistance sur le piston 20. Cependant, étant donnée la soudaineté de l'actionnement, pendant l'augmentation de pression dans la chambre arrière et celle de la force d'assistance, le plongeur 32 continue à avancer dans le piston 20 plus loin qu'il ne le faisait lors d'un actionnement normal. Il s'ensuit que le passage de valve 32a-40 est plus ouvert, c'est-à-dire qu'il offre une section de passage à l'air plus importante que dans un freinage normal, mais qui est encore jugée trop insuffisante.

Conformément à l'invention, un second passage est offert à l'air à la pression atmosphérique pour parvenir à la chambre arrière 18. En effet, le plongeur 32 ayant pénétré dans le piston 20 d'une quantité supérieure à celle d'un freinage normal, le joint d'étanchéité 62, porté par le plongeur 32 et situé le plus en avant, vient en avant de la portion 65 du piston 20. L'étanchéité du passage radial 70 par rapport à la portion 65 n'est plus assurée, et le passage 70 se trouve alors déboucher dans le volume annulaire 67, la portion 65 du piston 20 et le passage radial 70 jouant le rôle d'une valve à tiroir. C'est-à-dire que, dans cette situation de freinage brusque, l'air à la pression atmosphérique est admis dans la chambre arrière du servomoteur par le passage de valve 32a-40, les passages 66, le volume annulaire 67 et le passage radial 38, et aussi par les passages radiaux 70 du plongeur, le volume annulaire 67 et le passage radial 38. On voit donc que dans ce cas de freinage extrême, le passage radial 38 et le volume annulaire 67 sont reliés à l'atmosphère par deux sources : les passages 66 et les passages 70. Il en résulte évidement un plus grand afflux d'air vers la chambre arrière, dont une augmentation plus rapide de la force d'assistance, et donc une diminution du temps de réponse, ce qui était bien le but recherché.

Pendant cette phase de fonctionnement brusque, le disque de réaction 58 a été également sollicité par la face avant 20b du piston. Mais au cours de sa déformation vers l'arrière, il a très vite rencontré la face avant du plongeur qui avait avancé suffisamment pour découvrir les passages radiaux 70.

La réaction de la tige de poussée 56 a donc été très vite transmise à la tige de commande 34. Lorsque le conducteur a atteint l'effort maximum de freinage, ou l'effort souhaité, ce qu'il ressent au "toucher" de la pédale de frein, il maintient constant son effort de freinage ou il le relâche, ce qui est retransmis à la tige de commande. Le disque de réaction 58 tend alors à reprendre une position d'équilibre pour l'effort demandé. La face annulaire avant 20a du piston 20 fournissant toujours le même effort puisque la différence des pressions sur les deux faces de la jupe 14 n'a pas varié, le disque de réaction 58 va avoir tendance à se déformer davantage vers l'arrière, repoussant ainsi le plongeur 32 par rapport au piston 20. Les passages 70 vont alors de nouveau être obturés, et le servomoteur va revenir à un fonctionnement normal.

Les positions relatives au repos du plongeur 32 et du piston 20 sont définies par l'organe de butée 50. On pourra donc déterminer la distance entre l'axe des passages 70 et le bord avant de la portion 65 du piston 20 au repos, pour que les passages 70 restent recouverts par la portion 65 lors d'un freinage normal et soient découverts lors d'un freinage brusque. Une telle distance pourra varier selon les caractéristiques que l'on désire donner au servomoteur ainsi équipé.

On voit donc bien qu'on a réalisé un servomoteur dont le fonctionnement est classique pour des conditions normales d'utilisation, et où des passages d'air supplémentaires sont ouverts lors de freinages brusques, pour diminuer le temps de réponse du servomoteur dans ces conditions extrêmes.

Bien entendu, l'invention n'est pas limitée au mode de réalisation qui a été décrit à titre d'exemple, mais est susceptible de recevoir de nombreuses modifications qui apparaîtront à l'homme du métier. C'est ainsi par exemple que les passages d'air supplémentaires pourront être formés sur une autre partie du plongeur et que, si le coulissement du plongeur dans le piston peut être réalisé de façon parfaite, l'emploi de joints d'étanchéité sur le plongeur de part et d'autre des passages radiaux pourra être inutile. D'autre part, l'invention pourra également être appliquée à des servomoteurs en tandem ou à chambre additionnelle d'assistance. On pourra également réduire encore le temps de réponse du servomoteur pour des freinages brusques en reliant l'alésage borgne 33 du plongeur 32 à une source d'air sous une pression supérieure à la pression atmosphérique. De la sorte, pour des freinages normaux où seul le passage 32a-40 est ouvert vers la chambre arrière, celle-ci est alimentée en air à la pression atmosphérique de façon classique. Par contre, pour des freinages brusques, les passages 70 sont également ouverts, la chambre arrière se trouvera alimentée également en air sous une pression supérieure à la pression atmosphérique, d'où un remplissage plus rapide de cette chambre, et une diminution corrélative du temps de réponse. On pourra dans ce dernier cas, prévoir un clapet anti-retour interdisant le passage de l'air provenant des passages 70 vers le passage de valve 32a-40.

## Revendications

1. Servomoteur pneumatique d'assistance au freinage comportant une enveloppe (10) à l'intérieur de laquelle se trouve un piston (20) formé d'une partie tubulaire arrière (22) supportant une jupe (14) et qui, à l'aide d'une membrane déroulante (12), définit une chambre avant (16) reliée en permanence à une source de dépression et une chambre arrière (18) reliée sélectivement à la chambre avant (16) ou à l'atmosphère par un moyen de valve (20a, 32a, 40) actionné par une tige de commande (34) susceptible de s'appuyer, par l'intermédiaire d'un plongeur (32), sur l'une des faces d'un disque de réaction (58) solidaire d'une tige de poussée (56), le moyen de valve (20a, 32a, 40) comportant un clapet (40) coopérant avec un premier siège de valve (32a) formé sur le plongeur (32) et avec un second siège de valve (20a) formé sur le piston (20), la chambre arrière se trouvant reliée à l'atmosphère à travers un espace annulaire défini entre les premier et second sièges de valve lorsque le plongeur est enfoncé à l'intérieur du piston, caractérisé en ce que le plongeur présente au moins un passage radial (70), chaque passage radial étant, au repos et lors d'une action de freinage normal, fermé de façon étanche par une portion (65) du piston (20) et se trouvant, lors d'une action de freinage brusque, découvert par cette portion pour faire communiquer la chambre arrière avec l'atmosphère, chaque passage radial et la portion (65) de piston correspondante contribuant à constituer un second moyen de valve sélectivement opérationnel en cas de freinage brusque.

2. Servomoteur suivant la revendication 1, caractérisé en ce que chaque passage radial (70) communique en permanence avec l'atmosphère.

3. Servomoteur suivant la revendication 1 ou 2, caractérisé en ce que des passages axiaux (66) sont formés dans la portion (65) du piston (20).

4. Servomoteur selon l'une quelconque des revendications précédentes, caractérisé en ce que des joints d'étanchéité (62, 64) sont disposés à la périphérie extérieure du plongeur (32) en avant et en arrière des passages radiaux (70).

## Patentansprüche

1. Pneumatischer Servomotor zur Bremsunterstützung, mit einem Gehäuse (10), in dessen Inneren sich ein Kolben (20) befindet, der von einem ringförmigen hinteren Abschnitt (22) gebildet ist, der eine Schürze (14) trägt und mit Hilfe einer Abrollmembran (12) eine permanent mit einer Unterdruckquelle verbundene vordere Kammer (16) und eine hintere Kammer (18) abgrenzt, die wahlweise mit der vorderen Kammer (16) oder der Atmosphäre über ein Ventilmittel (20a, 32a, 40) verbunden ist, das von einer Steuerstange (34) betätigt wird, die in der Lage ist, sich über einen Tauchkolben (32) an einer der Seiten einer fest mit einer Schubstange (56) verbundenen Reaktionsscheibe (58) abzustützen, wobei das Ventilmittel (20a, 32a, 40a) ein Ventilelement (40) enthält, das mit einem ersten, auf dem Tauchkolben (32) gebildeten Ventilsitz (32a) und mit einem zweiten, auf dem Kolben (20) gebildeten Ventilsitz (20a) zusammenwirkt, wobei die hintere Kammer mit der Atmosphäre über einen ringförmigen, zwischen dem ersten und dem zweiten Ventilsitz abgegrenzten Raum verbunden ist, wenn der Kolben in das Innere des Kolbenelements eingeschoben ist, dadurch gekennzeichnet, daß der Kolben wenigstens einen radialen Durchgang (70) aufweist, wobei jeder radiale Durchgang in der Ruhestellung und bei einer normalen Bremsbetätigung dicht von einem Teil (65) des Kolbenelements (20) verschlossen ist und bei einer abrupten Bremsbetätigung von diesem Teil geöffnet wird, um die hintere Kammer mit der Atmosphäre zu verbinden, wobei jeder radiale Durchgang und der entsprechende Teil (65) des Kolbenelements zur Bildung eines zweiten Ventilmittels beitragen, das im Falle eines abrupten Bremsens selektiv betätigt ist.

2. Servomotor nach Anspruch 1, dadurch gekennzeichnet, daß jeder radiale Durchgang (70) permanent mit der Atmosphäre verbunden ist.

3. Servomotor nach Anspruch 1 oder 2, dadurch gekennzeichnet, daß in dem Teil (65) des Kolbenelements (20) axiale Durchgänge (66) gebildet sind.

4. Servomotor nach einem der vorhergehenden Ansprüche, dadurch gekennzeichnet, daß am Außenumfang des Kolbens (32) vor und hinter den radialen Durchgängen (70) Dichtungen (62, 64) angeordnet sind.

## Claims

1. Pneumatic brake-booster comprising a casing (10) inside which is situated a piston (20) consisting of a rear tubular part (22) which supports a skirt (14) and which with the aid of an unwinding diaphragm (12) defines a front chamber (16) permanently connected to a vacuum source and a rear chamber (18) selectively connected to said front chamber (16) or to the atmosphere by a valve means (20a, 32a, 40) actuated by a control rod (34) adapted to bear by means of a plunger (32) against one face of a reaction disk (58) fastened to a push rod (56), said valve means (20a, 32a, 40) comprising a valve closure member (40) cooperating with a first valve seat (32a) formed on said plunger (32) and with a second valve seat (20a) formed on said piston (20), the rear chamber being connected to the atmosphere via an annular space defined between the first and second valve seats when the plunger is driven into the piston, characterized in that the plunger has at least one radial passage (70), each radial passage being, at rest and during normal braking action, sealingly closed by a portion (65) of the piston (20) and being, during heavy braking action, uncovered by this portion so as to bring the rear chamber into communication with the atmosphere, each radial passage and the corresponding piston portion (65) contributing to the formation of a second valve means which is selectively operational in the event of heavy braking.

2. Booster according to Claim 1, characterized in that each radial passage (70) communicates permanently with the atmosphere.

3. Booster according to Claim 1 or 2, characterized in that axial passages (66) are formed in said portion (65) of said piston (20).

4. Booster according to any of the preceding claims, characterized in that seals (62, 64) are disposed on the outer periphery of the plunger (32) in front and at the rear of said radial passages (70).
